# EUROPÄISCHE PATENTSCHRIFT

(11) **EP 3 824 366 B1**
(45) Veröffentlichungstag und Bekanntmachung des Hinweises auf die Patenterteilung: **05.04.2023**
(21) Anmeldenummer: 20700251.0
(22) Anmeldetag: 07.01.2020
(51) Int. Cl.: G05D 21/02

(54) **VERFAHREN ZUR REGELUNG EINES GASGEMISCHES UNTER NUTZUNG EINES GASSENSORS, EINES BRENNGASSENSORS UND EINES GASGEMISCHSENSORS**
METHOD FOR THE CLOSED-LOOP CONTROL OF A GAS MIXTURE USING A GAS SENSOR, A COMBUSTION-GAS SENSOR AND A GAS-MIXTURE SENSOR
DISPOSITIF DE RÉGLAGE D'UN MÉLANGE GAZEUX AU MOYEN D'UN CAPTEUR DE GAZ, D'UN CAPTEUR DE GAZ COMBUSTIBLE ET D'UN CAPTEUR DE MÉLANGE GAZEUX

(30) Priorität: 17.01.2019 DE 102019101190
(43) Veröffentlichungstag der Anmeldung: 26.05.2021
(73) Patentinhaber: ebm-papst Landshut GmbH, 84030 Landshut (DE)
(72) Erfinder: HENRICH, Hartmut, 49076 Osnabrück (DE); WALD, Stephan, 48341 Altenberge (DE); HERMANN, Jens, 84034 Landshut (DE)
(74) Vertreter: Staeger & Sperling Partnerschaftsgesellschaft mbB
(86) Internationale Anmeldenummer: PCT/EP2020/050187
(87) Internationale Veröffentlichungsnummer: WO 2020/148110

(56) Entgegenhaltungen:
- WO-A1-00/65280
- DE-A1- 10 114 901

## Beschreibung

Die Erfindung betrifft ein Verfahren zur Regelung eines Gasgemisches bei einem brenngasbetriebenen Heizgerät.

Gattungsbildende Verfahren sind aus dem Stand der Technik bekannt, beispielsweise aus der Offenbarung gemäß der Druckschrift WO2006/000366A1 oder der WO00/65280.

Stand der Technik ist zudem eine Verbrennungsregelung nach dem sog. SCOT-Verfahren, bei dem die Steuerung der dem Brenner des Heizgerätes zugeführte Luftmenge entsprechend der Brennerleistung erfolgt. Dabei wird eine Flammensignalmessung mittels eines Ionisationssensors durchgeführt und das Gas-Luftgemisch auf einen in einer Kennlinie hinterlegten Soll-Ionisationsmesswert geregelt. Beim SCOT-Verfahren ist jedoch nachteilig, dass bei kleinen Brennerleistungen das Flammensignal stark absinkt und die Regelung damit unzuverlässig wird. Zudem ist der Adaptionsaufwand, insbesondere zur Anpassung der Brennergeometrie hoch und die Brennerleistung kann nur ungenau über die Gebläsedrehzahl eines den Luftvolumenstrom für das Gas-Luft-Gemisch liefernden Gebläses bestimmt werden.

Ferner ist im Stand der Technik eine auf die Anmelderin zurückgehende elektronische Gemischregelung durch einen thermischen Gasmassenstromsensor bekannt, mit dem die Brenngaseigenschaften erfasst werden können. Dabei misst der Gasmassenstromsensor im Brenngas den Brenngas-Volumenstrom und über ein Steuergerät wird über die thermische Leitfähigkeit aus einer Referenztabelle die Brenngasart ermittelt. Anschließend wird die erforderliche Luftmenge entsprechend dem ermittelten Luftbedarf errechnet und eingeregelt. Dabei ist jedoch aufwendig, dass alle Eingangsgrößen, d.h. der Gasvolumenstrom, der Luftvolumenstrom und die Brenngaseigenschaften gemessen und mithin überwacht werden müssen.

Der Erfindung liegt die Aufgabe zugrunde, ein Verfahren zur Regelung eines Gasgemisches bei einem brenngasbetriebenen Heizgerät bereitzustellen, das unabhängig ist von beeinflussenden Parametern wie die Brenngasfamilie, Brennerleistung, Abgaslängen oder eine Änderung des Gases, d.h. der Verbrennungsluft.

Diese Aufgabe wird durch die Merkmalskombination gemäß Anspruch 1 gelöst.

Erfindungsgemäß wird ein Verfahren zur Regelung eines Gasgemisches gebildet aus einem Gas und einem Brenngas bei einem brenngasbetriebenen Heizgerät vorgeschlagen, bei dem das Gasgemisch erzeugt wird, indem über ein erstes Stellglied eine Gasmenge und über ein zweites Stellglied eine Brenngasmenge bereitgestellt und gemischt werden. Ein mikrothermischer Gassensor, der mindestens eine stoffliche Eigenschaft des Gases erfasst, wird mit dem Gas beaufschlagt und übermittelt ein von dem jeweiligen Gas abhängiges Sensorsignal an ein Steuergerät. Zudem wird ein mikrothermischer Brenngassensor, der mindestens eine stoffliche Eigenschaft des Brenngases erfasst, mit dem Brenngas beaufschlagt und übermittelt ebenfalls ein von dem jeweiligen Brenngas abhängiges Sensorsignal an das Steuergerät. Schließlich wird zusätzlich ein mikrothermischer Gasgemischsensor, der mindestens eine stoffliche Eigenschaft des Gasgemisches erfasst, mit dem Gasgemisch beaufschlagt und übermittelt kontinuierlich ein von dem jeweiligen Gasgemisch abhängiges Sensorsignal an das Steuergerät.

Durch das Steuergerät werden die erfassten Sensorsignale des Brenngassensors mit labortechnisch gemessenen und in einer Wertetabelle im Steuergerät hinterlegten Vergleichswerten verglichen und daraus eine Brenngaszusammensetzung und ein Soll-Mischungsverhältnis des Gasgemisches aus Brenngas und Gas bestimmt. Das Soll-Mischungsverhältnis liegt bei einem Sollwert des Sensorsignals des Gasgemischsensors vor.

Über das Steuergerät wird das erfasste Sensorsignal des Gasgemischsensors mit dem Sollwert des Sensorsignals des Gasgemischsensors verglichen und bei einer Abweichung des erfassten Sensorsignals mit dem Sollwert des Sensorsignals des Gasgemischsensors mindestens eines der ersten und zweiten Stellglieder in Abhängigkeit von den erfassten Sensorsignalen des Gassensors und des Brenngassensors angesteuert. Das Gasgemisch wird dabei durch Erhöhung oder Verringerung der Gasmenge und/oder Erhöhung oder Verringerung der Brenngasmenge angepasst, bis der Sollwert des Sensorsignals des Gasgemischsensors erreicht ist.

Ein wesentlicher Punkt ist die Messung der drei Einflussgrößen, nämlich der mindestens einen stofflichen Eigenschaft des Gasgemisches, der mindestens einen stofflichen Eigenschaft des Brenngases und der mindestens einen stofflichen Eigenschaft des Gases. Eine Veränderung der Gasmenge oder der Brenngasmenge würde sofort durch eine Veränderung der stofflichen Eigenschaften am Gasgemischsensor erkannt werden. Eine Veränderung der stofflichen Eigenschaften des Gasgemisches am Gasgemischsensor kann über das Steuergerät unmittelbar ausgeregelt werden. Zudem kann sowohl für den Start des Heizgerätes als auch für dessen Regelung auf die Sensorsignale des Brenngassensor und des Gassensors zurückgegriffen werden, wie nachstehend näher erläutert.

Die von dem mikrothermischen Gasgemischsensor, dem Brenngassensor und dem Gassensor erfasste stoffliche Eigenschaft des Gasgemisches bzw. Brenngases ist vorzugsweise die Wärmeleitfähigkeit oder die Temperaturleitfähigkeit des Gasgemisches, des Brenngases bzw. des Gases. Es können jedoch auch mehrere dieser stofflichen Eigenschaften erfasst werden, so dass eine genauere Zuordnung der Mehrzahl der Eigenschaften auf das Gasgemisch möglich ist.

Eine andere Möglichkeit besteht in wenigstens einem Gasmassensensor basierend auf dem Funktionsprinzip der Ultraschallmessung zur Ermittlung der jeweils gas-, brenngas- bzw. gasgemischabhängig vorliegenden spezifischen Schallgeschwindigkeit.

Das Verfahren ist erfindungsgemäß dadurch gekennzeichnet, dass der Sollwert des Sensorsignals in Abhängigkeit einer Zusammensetzung des Gases oder des Brenngases durch das Steuergerät angepasst wird. Ändert sich die Zusammensetzung des Brenngases (z.B. von Propan auf Butan), verändern sich die gemessenen Eigenschaften des Gasgemisches. Zusätzlich benötigen andere Zusammensetzungen an Brenngas für eine optimale Verbrennung auch andere Luftmengen. Es ist somit auch ein neues Mischungsverhältnis zwischen Gas und Brenngas erforderlich.

Zusätzlich wird durch die Verwendung des Gassensors ermöglicht, eine Anpassung des Sollwerts des Sensorsignals des Gasgemischsensors in Abhängigkeit einer Zusammensetzung nur des Gases vorzunehmen. Wenn sich beispielsweise nur die relative Feuchtigkeit des Gases ändert, muss zwar der Sollwert des Sensorsignals des Gasgemischsensors, nicht jedoch das Mischungsverhältnis an Gas und Brenngas angepasst werden. Die Ermittlung des neuen Sollwerts des Sensorsignals des Gasgemischsensors erfolgt anhand einer Berechnung oder einem Vergleich mit einer Wertetabelle. Auch können entsprechende Kennlinien im Steuergerät hinterlegt werden.

Eine Anpassung des Sollwerts des Sensorsignals Gasgemischsensors zur Anpassung des Mischungsverhältnisses an Gas und Brenngas erfolgt erfindungsgemäß durch einen Kalibrierprozess. Hierfür werden vom Steuergerät das erste Stellglied der Gasmenge oder das zweite Stellglied der Brenngasmenge soweit verändert, bis das gewünschte Ergebnis erreicht wird. Der ursprüngliche Sollwert wird für die weitere Gemischregelung durch das neue gemessene Sensorsignal ersetzt.

Insbesondere erfolgt der Kalibrierprozess durch eine Ionisationsstromregelung eines Flammensignals eines Brenners des Heizgerätes, bis ein lonisationssollwert erreicht ist. Hierfür wird zunächst eine stöchiometrische Verbrennung des Brenners des Heizgerätes eingestellt. Über eine Ionisationssonde werden das Flammensignal des Brenners des Heizgerätes und dadurch ein entsprechender Ionisationsstrom erfasst. Bei der stöchiometrischen Verbrennung ist der lonisationsstrom maximal. Aus diesem Wert des Ionisationsstroms wird mit einer labortechnisch ermittelten Prozentzahl ein Ionisationssollwert berechnet und als künftiger lonisationsstromsollwert abgespeichert, der bei der gewünschten Verbrennung erreicht werden muss. Anschließend wird ausschließlich die Gasmenge um einen vorbestimmten Faktor reduziert, um den Brenner mit dem gewünschten Gasgemisch bei dem vorbestimmten Ionisationssollwert zu betreiben.

Das Verfahren ist ferner dadurch gekennzeichnet, dass beim Erreichen des Ionisationssollwerts die mindestens eine stoffliche Eigenschaft des Gasgemisches mittels des Gasgemischsensors gemessen und als neuer Sollwert des Sensorsignals im Steuergerät hinterlegt wird. Der neue Sollwert wird für die weitere Regelung verwendet und ersetzt den bisherigen Sollwert.

Der Kalibrierprozess erfolgt vorzugsweise bei Unplausibilitäten des Sensorsignals des Gasgemischsensors oder in zyklischen vorbestimmten Abständen. Die Feststellung von Unplausibilitäten des Sensorsignals geschieht in einer Ausführung bei einem Start des Heizgerätes, indem zunächst ausschließlich das bekannte Gas zugeführt und der Gasgemischsensor damit beaufschlagt wird. Eine Unplausibilität liegt dann vor, wenn das von dem Gasgemischsensor gemessene Sensorsignal der stofflichen Eigenschaft, z.B. die Wärmeleitfähigkeit oder die Temperaturleitfähigkeit, nicht einem Sensorsignal für das bekannte Gas entspricht. Bei Heizgeräten dient als Gas üblicherweise die Umgebungsluft, deren stoffliche Eigenschaften bekannt sind.

Verschiedene Brenngasarten bzw. Brenngasfamilien (Erdgas, Flüssiggas) beeinflussen die stofflichen Eigenschaften des Gasgemisches auf unterschiedliche Weise. Beispielsweise nimmt bei einer Zudosierung von Flüssiggas zu Luft die Wärmeleitfähigkeit ab, bei einer Zudosierung von Erdgas zu Luft nimmt die Wärmeleitfähigkeit zu. In einer Weiterbildung des Verfahrens ist deshalb vorgesehen, dass bei einem Start des Heizgerätes zunächst ausschließlich das bekannte Gas, vorzugsweise Luft, zugeführt und der Gasgemischsensor damit beaufschlagt wird. Anschließend wird das Brenngas zugeführt, das Gasgemisch erzeugt und der Gasgemischsensor mit dem Gasgemisch beaufschlagt. Aus der Änderung des Sensorsignals bei der Zuführung des Brenngases wird die Gasart des Brenngases festgestellt. Anschließend passt das Steuergerät das Gasgemisch in Abhängigkeit von der festgestellten Gasart des Brenngases an, bis der Sollwert des Sensorsignals erreicht ist. Vorteilhafterweise kann damit die Startleistung sofort nach Erkennen der Gasfamilie vom Steuergerät über die Stellung des Stellglieds des Brenngases auf einen günstigen Startpunkt gesteuert werden und das Zündgemisch zum Brennerstart wird schneller und präziser erreicht.

Ferner ist bei dem Verfahren ein vorteilhafter Schritt, dass durch den Brenngassensor unmittelbar eine Gasfamilie des Brenngases festgestellt wird. Unterschiedliche Gasfamilien benötigen unterschiedliche Wirkungsrichtungen der Regelung, d.h. in Abhängigkeit von der stofflichen Eigenschaft des jeweiligen Brenngases muss der Anteil an Gas im Mischungsverhältnis erhöht oder erniedrigt werden. Die Wirkungsrichtung der Regelung wird demnach dadurch bestimmt wird, ob zur Erreichung des Sollwerts des Sensorsignals die zugeführte Brenngasmenge erhöht oder erniedrigt wird.

Ferner wird aus der Änderung des Sensorsignals des Brenngassensors bei der Zuführung des Brenngases die Wirkungsrichtung der Regelung erfasst und daraus festgelegt, ob zur Erreichung des Sollwerts des Sensorsignals die zugeführte Brenngasmenge erhöht oder erniedrigt wird.

Ein weiterer Aspekt des Verfahrens ist, dass beim Start des Heizgerätes das einzuregelnde Mischungsverhältnis des Gasgemisches vorausberechnet wird, indem die über den Brenngassensor erfassten stofflichen Eigenschaften des Brenngases mit Werten einer im Steuergerät hinterlegten Wertetabelle verglichen und daraus der sich ergebende Bedarf an Gas zur Festlegung des Mischungsverhältnisses des Gasgemisches bestimmt wird.

Bei Heizgeräten wird als Gas üblicherweise Luft verwendet. Für Regelungsverfahren der vorliegenden Art gilt, dass die Luftzahl λ in der Technik das Verhältnis zwischen Luft und Brenngas bestimmt, wobei beispielsweise eine Luftzahl λ=1,3 einem Luftüberschuss von 30% entspricht. Ein für ein bestimmtes Brenngas erforderlicher Luftbedarf L ist abhängig von der Brenngasbeschaffenheit, wobei beispielhafte Werte für Propan: L= ca. 30, Erdgas aus der Gruppe H: L= ca. 10 und Erdgas aus der Gruppe L: L= ca. 8 sind. Die Luftzahl ist in der Praxis vorzugsweise bei verschiedenen Brennerleistungspunkten und bei verschiedenen Gasfamilien (z.B. Erdgas oder Flüssiggas) unterschiedlich. In der Regel wird dieser Zusammenhang in Form von leistungsabhängigen λ-Kennlinien im Steuergerät abgespeichert. Zur automatischen Auswahl der richtigen Kennlinie ist eine automatische Brenngasarterkennung nötig, welche über den Brenngassensor erfolgt. Der zu einem definierten Gas-Luftgemisch erforderliche Luftvolumenstrom vL berechnet sich aus dem Brenngasvolumenstrom vG multipliziert mit dem Luftbedarf L multipliziert mit der Luftzahl: vL = vG * L * λ. Somit lassen sich durch einen Vergleich mit labortechnisch ermittelten Werten die Eigenschaften für die gewünschte einzuregelnde Gasgemischzusammensetzung berechnen.

Eine Weiterbildung des Verfahrens umfasst ferner eine Ausführung für den Fall, dass die thermischen Eigenschaften des Brenngases zu dicht an den thermischen Eigenschaften der Luft liegen und keine zuverlässige Gemischregelung möglich ist, da jede Veränderung sowohl der Luftmenge als auch der Gasmenge keine Signalveränderung am Gasgemischsensor bewirkt. Dieser Fall kann vorliegen, wenn beispielhaft Mischbrenngase zur Verbrennung eingesetzt werden, die zufällig die gleichen physikalischen stofflichen Eigenschaften wie Luft haben. Dieser Zustand wird von dem Steuergerät sowohl beim Start des Heizgerätes wie auch bei einer Kalibration durch eine Plausibilitätskontrolle dadurch erkannt, dass bei beliebiger Änderung der Luft oder der Gasmenge keine wesentliche Änderung am Sensorsignal gemessen wird. In diesem Fall kann das Steuergerät die Gemischregelung über den Gasgemischsensor vorübergehend ausschalten und mit reduziertem Modulationsbereich ausschließlich über die für die Kalibration beschriebene Ionisationsstromregelung steuern. Sobald die Brenngasbeschaffenheit wieder eine Regelung über den im Gasgemisch positionierten Gasgemischsensor ermöglicht, wird die Gemischregelung über den Gasgemischsensor fortgesetzt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein prinzipieller Aufbau zur Durchführung des Verfahrens,
- Fig. 2: einen Aufbau eines Heizgerätes zur Durchführung des Verfahrens,
- Fig. 3: eine Regelungskennlinie des Sensorsignals des Gasgemischsensors,
- Fig. 4: eine Regelungskennlinie des Sensorsignals des Gasgemischsensors,
- Fig. 5: Regelungskennlinien vor und nach einer Veränderung der Gaseigenschaften,
- Fig. 6: Regelungskennlinien vor und nach einer Veränderung der Brenngaseigenschaften,
- Fig. 7: eine Kennlinie der Ionisationsstromregelung.

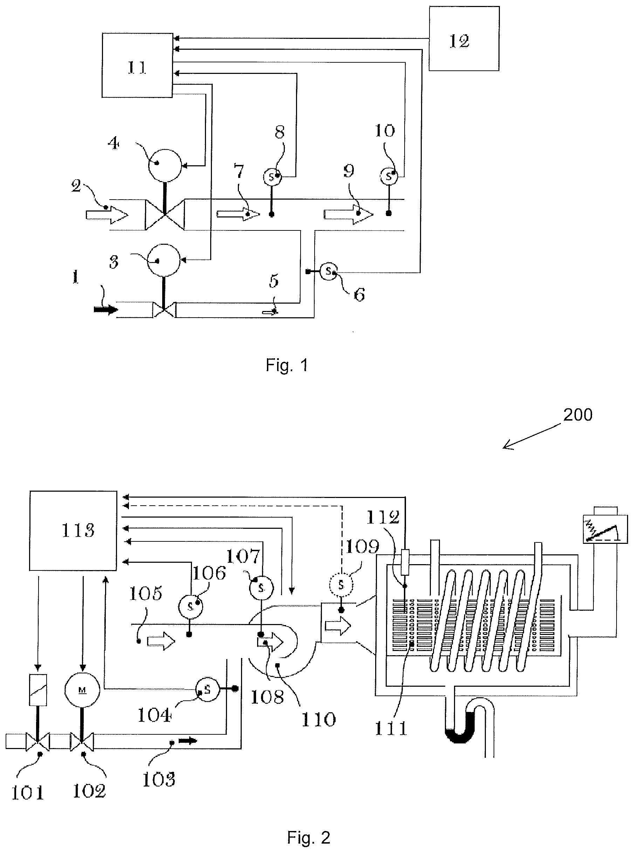

In Figur 1 ist ein prinzipieller Aufbau zur Durchführung des Verfahrens aufgezeigt. In der nachfolgenden Figurenbeschreibung wird als Gas stets Luft angenommen, auch wenn theoretisch auch andere Gase verwendet werden können.

Über das Steuergerät 11 werden das Stellglied 4 zur Zuführung einer steuerbaren Menge an Luft 2 und das Stellglied 3 zur Zuführung einer steuerbaren Menge an Brenngas 1 in ihren jeweiligen Öffnungsstellungen geregelt, um das Gasgemisch 9 in einem bestimmten Brenngas-Luftgemisch-Verhältnis zu erzeugen. Im Bereich des Gasgemisches 9 ist der Gasgemischsensor 10 positioniert und wird mit dem Gasgemisch 9 beaufschlagt. Im Bereich des geregelten Luft 7 ist der Gassensor positioniert, der ausschließlich mit Luft beaufschlagt wird. Im Bereich des geregelten Brenngases 5 ist der Brenngassensor 6 positioniert, der ausschließlich mit Brenngas beaufschlagt wird. Jeder der drei Sensoren 6, 8, 10 ist ausgebildet, die physikalischen stofflichen Eigenschaften der Wärmeleitfähigkeit, Temperaturleitfähigkeit und Schallgeschwindigkeit zu messen. Über eine Prozessüberwachungseinheit 12 werden das Steuergerät 11 und die Regelung überwacht. Zudem sind über Pfeile die Signalleitungen zu dem und von dem Steuergerät 11 gezeigt, welches die Regelung des Gasgemisches 9 verarbeitet.

Figur 2 zeigt eine konkrete Ausführungsform eines brenngasbetriebenen Heizgerätes 200 mit einem Gassicherheitsventil 101, einem Gasregelventil 102 als Stellglied der Menge an Brenngas 103, einem Mischgebläse 110 zur Ansaugung von Luft 105 und Mischung mit dem Brenngas 103 zur Erzeugung des Gasgemisches 108. Über die Drehzahl des Mischgebläses 110 ist die Luftmenge anpassbar; es stellt mithin das Stellglied für die Luftzufuhr. Das Heizgerät 200 umfasst den mikrothermischen Gasgemischsensor 107 im Gasgemisch 108, wobei ein zweiter Gasgemischsensor 109 als alternative Einbauposition im Ausblasbereich des Mischgebläses 110 dargestellt ist. Grundsätzlich wird jedoch kein zweiter Gasgemischsensor benötigt. Das Heizgerät 200 umfasst ferner den mikrothermischen Gassensor 106 im Bereich der Luftzufuhr und den Brenngassensor 104 im Bereich der Gaszufuhr. Das Mischgebläse 110 fördert das Gasgemisch 108 zum Brenner 111, an dem die Ionisationselektrode 112 verbaut ist, um die Brennerflamme zu überwachen. Zudem sind über Pfeile die Signalleitungen zu dem und von dem Steuergerät 113 gezeigt, welches die Regelung des Gasgemisches 108 verarbeitet.

Im Folgenden wird auf die Bauteile des prinzipiellen Aufbaus gemäß Figur 1 Bezug genommen, die jedoch unmittelbar auf das Heizgerät 200 gemäß Figur 2 übertragbar sind.

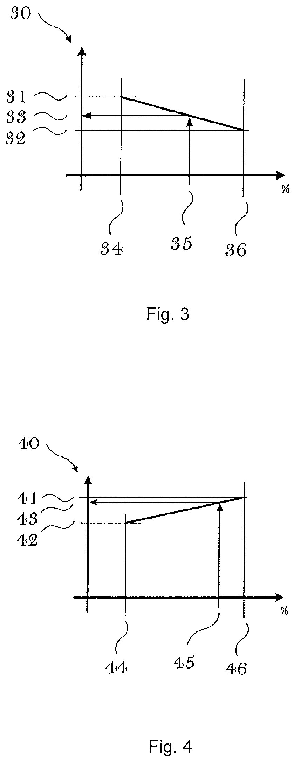

In Figur 3 ist in einem Diagramm 30 ein für die Regelung verwendeter vereinfachter linearer Zusammenhang zwischen dem von dem Gasgemischsensor 10 erfassten Sensorsignal 31 bei reiner Luft 2 (Bezugszeichen 34 entspricht 100% Luft) und dem Sensorsignal 32 bei reinem Brenngas 1 (Bezugszeichen 36 entspricht 100% Brenngas) dargestellt. Für das Gasgemisch 9 (Bezugszeichen 35 entspricht 60% Luft und 40% Brenngas) liegt das Sensorsignal 33 dazwischen. Die Mengen an Luft 2 und Brenngas 1 werden über die jeweiligen Stellglieder 3 und/oder 4 in Abhängigkeit von den durch den Gassensor 8 und den Brenngassensor 6 erfassten Signalwerten solange angepasst, bis die vom Prozess erforderlichen Gemischeigenschaften des gewünschten Mischungsverhältnisses vom Gasgemischsensor 10 detektiert werden. Figur 3 zeigt einen linearen Verlauf der Kennlinie des Sensorsignals, es sind jedoch auch nicht-lineare Kennlinien möglich, die beispielsweise über Wertetabellen eine Regelung zu den entsprechenden Positionen der Stellglieder 3, 4 ermöglichen.

Gemäß Figur 3 sinkt das Sensorsignal, je mehr Brenngas 1 zugeführt wird. Das Sensorsignal wird beispielhaft als abhängig von der Wärmeleitfähigkeit als stoffliche Eigenschaft des Gasgemisches 5 dargestellt, wobei das Brenngas beispielsweise Flüssiggas ist und die Wärmeleitfähigkeit von Flüssiggas niedriger ist als diejenige von Luft. Es gibt jedoch auch Gasarten, bei denen die Wirkrichtung der Regelung umgekehrt ist, wie in Figur 4 gezeigt. Hier ist das Brenngas 1 Erdgas, dessen Wärmeleitfähigkeit höher ist als diejenige von Luft. Im Diagramm 40 gemäß Figur 4 ein für die Regelung verwendeter vereinfachter linearer Zusammenhang zwischen dem von dem Gasgemischsensor 10 erfassten Sensorsignal 42 bei reiner Luft 2 (Bezugszeichen 44 entspricht 100% Luft) und dem Sensorsignal 41 bei reinem Brenngas 1 (Bezugszeichen 46 entspricht 100% Brenngas/Erdgas) dargestellt. Für das Gasgemisch 9 (Bezugszeichen 45 entspricht 75% Luft und 25% Brenngas/Erdgas) liegt das Sensorsignal 43 dazwischen, jedoch nahe dem Sensorsignal 41 reinen Brenngases 1. Für eine Regelung mit Erdgas wird vom Steuergerät 11 aus der Signaländerung des Gasgemischsensors 10 bei der Erhöhung der Brenngasmenge die Wirkungsrichtung der Regelung bestimmt und für die weitere Gemischregelung zu Grunde gelegt. Über den Brenngassensor 8 ist unmittelbar feststellbar, um welche Gasfamilie es sich handelt. Das Steuergerät 11 kann somit anhand des erfassten Sensorsignals unmittelbar die richtige Regelrichtung festlegen, um den Sollwert das Sensorsignal des Gasgemischsensors 10 und mithin das gewünschte Mischungsverhältnis an Brenngas und Luft zu einzuregeln.

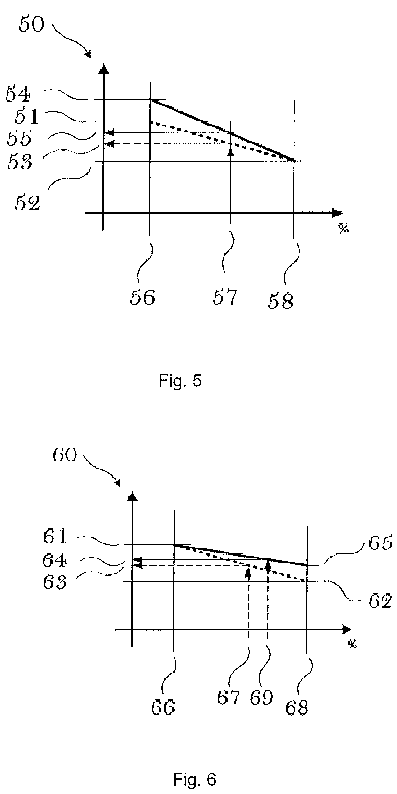

Die Ermittlung des Sollwerts des Sensorsignals des Gasgemischsensors 10 ist im Diagramm 50 gemäß Figur 5 schematisch dargestellt. Aus der durch den Gassensor 8 gemessenen stofflichen Eigenschaft, z.B. bei Veränderung der relativen Luftfeuchtigkeit, wird ein neuer Sensorsignal-Sollwert ermittelt. Das Mischungsverhältnis 57 bleibt jedoch gleich. Wenn beispielhaft bei reiner Luft 1 (Bezugszeichen 56 entspricht 100% Luft; Bezugszeichen 58 reinem Brenngas) sich aufgrund einer Veränderung der Beschaffenheit das Sensorsignal, z.B. einer Änderung der gemessen relativen Luftfeuchtigkeit, von dem ursprünglichen Wert (Bezugszeichen 51) auf einen neuen Wert (Bezugszeichen 54) ändert, wird vom Steuergerät 11 der Gemischsensor-Sollwert von dem alten Wert (Bezugszeichen 53) auf den neuen Wert (Bezugszeichen 55) hochgerechnet oder mit Werten aus einer im Steuergerät 11 hinterlegten Wertetabellen korrigiert. Die Bezugszeichen 52 und 54 bezeichnen die Sensorsignale bei reiner Luft bzw. bei reinem Brenngas.

Figur 6 zeigt ein Diagramm 60 zur Darstellung der Kalibration, wenn sich beispielsweise die Beschaffenheit des Brenngases 1 so ändert, dass eine neue Gasgemischzusammensetzung erforderlich ist, um eine optimale Verbrennung zu gewährleisten. In Figur 6 verändert sich das Brenngas als Beispiel von Propan auf Butan. Die Bezugszeichen 66 und 68 bestimmen den Bereich zwischen 100% Luft und 100% Brenngas, wobei der Signalwert 61 bei 100% Brenngas vorliegt. Bei der Kalibrierung wird das Gasgemisch 9 von dem ursprünglichen Mischungsverhältnis 67 mit dem zugehörigen Signalwert 63 auf das neue Mischungsverhältnis 69 mit dem zugehörigen Signalwert 64 verändert. Durch die Erfassung der stofflichen Eigenschaften sowohl der Luft 2 als auch des Brenngases 1 über jeweils einen eigenen Sensor kann die Wirkungsrichtung der Regelung vorbestimmt werden und das Gasgemisch 9 für die nachfolgende Regelung der Brenngasmenge und/oder Luftmenge voreingestellt werden. In den Figuren 5 und 6 ist die Situation der ursprünglichen Beschaffenheit des Brenngases gestrichelt, die neue Situation mit durchgezogenen Linien und Pfeilen dargestellt.

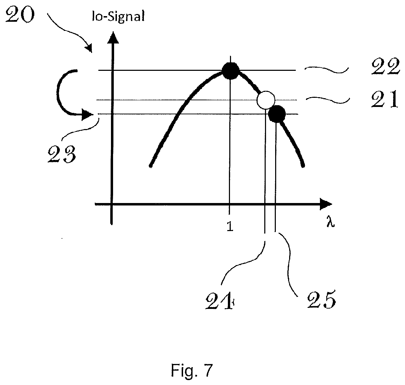

Figur 7 zeigt ein Diagramm 20 zur Kalibrierung mittels Ionisationsstromregelung mit einer Kennlinie des von der Ionisationselektrode in der Brennerflamme erfassten Ionisationssignals (Io-Signal) gegenüber dem Brenngas-Luftverhältnis λ. Da der prinzipielle Aufbau gemäß Figur 1 keine Ionisationselektrode zeigt, wird nachfolgend auf das Heizgerät 200 gemäß Figur 2 verwiesen. Vom Steuergerät 113 wird während des Brennerbetriebes die Menge an Luft 105 auf einen vorgegebenen Wert gesteuert, das Ionisationssignal an der Ionisationselektrode 112 des Brenners 111 gemessen und die Menge an Brenngas 103 soweit erhöht, bis das Ionisationssignal von dem ursprünglich vorhandenen Ionisationswert 21 bei einem Brenngas-Luftverhältnis 24 auf das Maximum 22 angestiegen ist. Aus diesem Wert wird mit einer labortechnisch ermittelten Prozentzahl der Ionisationssollwert 23 berechnet und als künftiger lonisationsstrom-Sollwert abgespeichert, der das gewünschte Brenngas-Luftverhältnis 25 mit höherem Luftüberschuss erreicht werden muss.

## Patentansprüche

1. Verfahren zur Regelung eines Gasgemisches (9, 108) gebildet aus einem Gas (2, 105) und einem Brenngas (1, 103) bei einem brenngasbetriebenen Heizgerät, wobei das Gasgemisch erzeugt wird, indem
über ein erstes Stellglied (4, 107) eine Gasmenge und
über ein zweites Stellglied (3, 102) eine Brenngasmenge bereitgestellt und gemischt werden, wobei
ein mikrothermischer Gassensor (8, 106), der mindestens eine stoffliche Eigenschaft des Gases (2, 105) erfasst, mit dem Gas beaufschlagt wird und ein von dem jeweiligen Gas abhängiges Sensorsignal an ein Steuergerät (11, 113) übermittelt,
ein mikrothermischer Brenngassensor (6, 104), der mindestens eine stoffliche Eigenschaft des Brenngases (9, 108) erfasst, mit dem Brenngas beaufschlagt wird und ein von dem jeweiligen Brenngas abhängiges Sensorsignal an das Steuergerät (11, 113) übermittelt,
ein mikrothermischer Gasgemischsensor (10, 107, 109), der mindestens eine stoffliche Eigenschaft des Gasgemisches (9, 108) erfasst, mit dem Gasgemisch beaufschlagt wird und kontinuierlich ein von dem jeweiligen Gasgemisch abhängiges Sensorsignal an das Steuergerät (11, 113) übermittelt, wobei durch das Steuergerät (11, 113) die erfassten Sensorsignale des Brenngassensors (6, 104) mit labortechnisch gemessenen und in einer Wertetabelle im Steuergerät (11, 113) hinterlegten Vergleichswerten verglichen und daraus eine Brenngaszusammensetzung und ein Soll-Mischungsverhältnis des Gasgemisches (9, 108) aus Brenngas und Gas bestimmt werden, wobei das Soll-Mischungsverhältnis bei einem Sollwert des Sensorsignals des Gasgemischsensors (10, 106, 109) vorliegt,
und wobei das Steuergerät (11, 113) das erfasste Sensorsignal des Gasgemischsensors (10, 106, 109) mit dem Sollwert des Sensorsignals des Gasgemischsensors (10, 107, 109) vergleicht und bei einer Abweichung des erfassten Sensorsignals mit dem Sollwert des Sensorsignals des Gasgemischsensors (10, 107, 109) mindestens eines der ersten und zweiten Stellglieder in Abhängigkeit von den erfassten Sensorsignalen des Gassensors (8, 106) und des Brenngassensors (6, 104) ansteuert und dadurch das Gasgemisch (9, 108) durch Erhöhung oder Verringerung der Gasmenge und/oder Erhöhung oder Verringerung der Brenngasmenge anpasst, bis der Sollwert des Sensorsignals des Gasgemischsensors (10, 107, 109) erreicht ist, **dadurch gekennzeichnet, dass**
der Sollwert des Sensorsignals des Gasgemischsensors (10, 107, 109) in Abhängigkeit einer Zusammensetzung des Gases oder des Brenngases durch das Steuergerät (11, 113) angepasst wird, und wobei
die Anpassung des Sollwerts des Sensorsignals des Gasgemischsensors (10, 107, 109) durch einen Kalibrierprozess erfolgt.

2. Verfahren nach Anspruch 1, **dadurch gekennzeichnet, dass** die von dem mikrothermischen Brenngassensor (6, 104) und dem Gasgemischsensor (10, 106, 109) erfasste stoffliche Eigenschaft des Brenngases und des Gasgemisches (9, 108) die Wärmeleitfähigkeit und/oder die Temperaturleitfähigkeit des Brenngases und des Gasgemisches ist/sind.

3. Verfahren nach Anspruch 1 oder 2, **dadurch gekennzeichnet, dass** die von dem mikrothermischen Gassensor (8, 106) erfasste stoffliche Eigenschaft des Gases die relative Feuchtigkeit und/oder die Wärmeleitfähigkeit und/oder die Temperaturleitfähigkeit und/oder die Schallgeschwindigkeit des Gases ist/sind.

4. Verfahren nach einem der vorigen Ansprüche Anspruch 1-3, **dadurch gekennzeichnet, dass** der Kalibrierprozess durch eine Ionisationsstromregelung eines Flammensignals eines Brenners (111) des Heizgerätes (200) erfolgt, bis ein Ionisationssollwert erreicht ist.

5. Verfahren nach Anspruch 4, **dadurch gekennzeichnet, dass** beim Erreichen des Ionisationssollwerts die mindestens eine stoffliche Eigenschaft des Gasgemisches (9, 108) mittels des Gasgemischsensors (10, 107, 109) gemessen und als neuer Sollwert des Sensorsignals im Steuergerät (11, 113) hinterlegt wird.

6. Verfahren nach Anspruch 1 - 5, **dadurch gekennzeichnet, dass** der Kalibrierprozess bei Unplausibilitäten des Sensorsignals des Gasgemischsensors (10, 106, 109) oder zyklisch erfolgt.

7. Verfahren nach dem vorigen Anspruch, **dadurch gekennzeichnet, dass** eine Feststellung der Unplausibilitäten des Sensorsignals bei einem Start des Heizgerätes erfolgt, indem zunächst ausschließlich das bekannte Gas (2, 105) zugeführt und der Gasgemischsensor (10, 107, 109) damit beaufschlagt wird, wobei eine Unplausibilität vorliegt, wenn das von dem Gasgemischsensor (10, 107, 109) gemessene Sensorsignal nicht einem Sensorsignal für das bekannte Gas (2, 105) entspricht.

8. Verfahren nach einem der vorigen Ansprüche, **dadurch gekennzeichnet, dass** durch den Brenngassensor (6, 104) unmittelbar eine Gasfamilie des Brenngases festgestellt wird.

9. Verfahren nach dem vorigen Anspruch, **dadurch gekennzeichnet, dass** aus der Bestimmung der Gasfamilie die Wirkungsrichtung der Regelung des Mischungsverhältnisses des Gasgemisches (9, 108) unmittelbar festgelegt wird, wobei die Wirkungsrichtung der Regelung dadurch bestimmt wird, ob zur Erreichung des Sollwerts des Sensorsignals die zugeführte Brenngasmenge erhöht oder erniedrigt wird.

10. Verfahren nach dem vorigen Anspruch, **dadurch gekennzeichnet, dass** aus der Änderung des Sensorsignals des Brenngassensors (6, 104) bei der Zuführung des Brenngases (1, 103) die Wirkungsrichtung der Regelung erfasst und daraus festgelegt wird, ob zur Erreichung des Sollwerts des Sensorsignals die zugeführte Brenngasmenge erhöht oder erniedrigt wird.

11. Verfahren einem der vorigen Ansprüche 8 bis 10, **dadurch gekennzeichnet, dass** beim Start des Heizgerätes (200) das einzuregelnde Mischungsverhältnis des Gasgemisches (9, 108) vorausberechnet wird, indem die über den Brenngassensor (6, 104) erfassten stofflichen Eigenschaften des Brenngases mit Werten einer im Steuergerät hinterlegten Wertetabelle verglichen und daraus der sich ergebende Bedarf an Gas zur Festlegung des Mischungsverhältnisses des Gasgemisches (9, 108) bestimmt wird.

12. Verfahren nach einem der vorigen Ansprüche, **dadurch gekennzeichnet, dass** das Gas (2, 105) Luft und das Brenngas (1, 103) beliebig wählbar ist.

13. Heizgerät (200) ausgebildet zur Durchführen des Verfahrens nach einem der vorigen Ansprüche.

## Claims

1. A method for closed-loop control of a gas mixture (9, 108) formed from a gas (2, 105) and a combustion gas (1, 103) in a combustion-gas-operated heating unit, wherein the gas mixture is produced by providing an amount of gas via a first control element (4, 107) and an amount of combustion gas via a second control element (3, 102) and mixing said amounts, wherein
a microthermal gas sensor (8, 106) which detects at least one material property of the gas (2, 105) is exposed to the gas and transmits a sensor signal, which is dependent on the respective gas, to a control device (11, 113),
a microthermal combustion gas sensor (6, 104) which detects at least one material property of the combustion gas (9, 108) is exposed to the combustion gas and transmits a sensor signal, which is dependent on the respective combustion gas, to the control unit (11, 113),
a microthermal gas mixture sensor (10, 107, 109) which detects at least one material property of the gas mixture (9, 108) is exposed to the gas mixture and continuously transmits a sensor signal, which is dependent on the respective gas mixture, to the control unit (11, 113),
wherein the detected sensor signals of the combustion gas sensor (6, 104) are compared by the control unit (11, 113) with laboratory-measured comparison values stored in a value table in the control unit (11, 113), and a combustion gas composition and a target mixing ratio of the gas mixture (9, 108) of combustion gas and gas are determined therefrom, wherein the target mixing ratio is present at a target value of the sensor signal of the gas mixture sensor (10, 106, 109),
and wherein the control unit (11, 113) compares the detected sensor signal of the gas mixture sensor (10, 106, 109) with the target value of the sensor signal of the gas mixture sensor (10, 107, 109) and, in the event of a deviation of the detected sensor signal from the target value of the sensor signal of the gas mixture sensor (10, 107, 109), activates at least one of the first and second control elements depending on the detected sensor signals of the gas sensor (8, 106) and of the combustion gas sensor (6, 104) and thereby adjusts the gas mixture (9, 108) by increasing or decreasing the amount of gas and/or increasing or decreasing the amount of combustion gas until the target value of the sensor signal of the gas mixture sensor (10, 107, 109) is reached, **characterized in that**
the target value of the sensor signal of the gas mixture sensor (10, 107, 109) is adjusted by the control unit (11, 113) depending on a composition of the gas or of the combustion gas, and wherein
adjusting the target value of the sensor signal of the gas mixture sensor (10, 107, 109) is carried out by a calibration process.

2. The method according to claim 1, **characterized in that** the material property of the combustion gas and of the gas mixture (9, 108) detected by the microthermal combustion gas sensor (6, 104) and the gas mixture sensor (10, 106, 109) is/are the heat conductivity and/or the thermal diffusivity of the combustion gas and of the gas mixture.

3. The method according to claim 1 or 2, **characterized in that** the material property of the gas detected by the microthermal gas sensor (8, 106) is/are the relative humidity and/or the heat conductivity and/or the thermal diffusivity and/or the sound velocity of the gas.

4. The method according to any one of the preceding claims 1 to 3, **characterized in that** the calibration process is performed by an ionization current control of a flame signal of a burner (111) of the heating unit (200) until a ionization target value is reached.

5. Method according to claim 4, **characterized in that** upon reaching the ionization target value, the at least one material property of the gas mixture (9, 108) is measured by means of the gas mixture sensor (10, 107, 109) and is stored in the control unit (11, 113) as a new target value of the sensor signal.

6. The method according to claims 1 to 5, **characterized in that** the calibration process is carried in the event of implausibilities of the sensor signal of the gas mixture sensor (10, 106, 109) or cyclically.

7. The method according to the preceding claim, **characterized in that** detecting the implausibilities of the sensor signal takes place when the heating unit is started by initially supplying only the known gas (2, 105) and exposing the gas mixture sensor (10, 107, 109) to it, wherein an implausibility exists if the sensor signal measured by the gas mixture sensor (10, 107, 109) does not correspond to a sensor signal for the known gas (2, 105).

8. The method according to any one of the preceding claims, **characterized in that** a gas family of the combustion gas is directly detected by the combustion gas sensor (6, 104).

9. The method according to the preceding claim, **characterized in that** the direction of action of the closed-loop control of the mixing ratio of the gas mixture (9, 108) is specified directly from the determination of the gas family, wherein the direction of action of the closed-loop control is determined by whether the supplied amount of combustion gas is increased or decreased in order to reach the target value of the sensor signal.

10. The method according to any one of the preceding claim, **characterized in that** the direction of action of the closed-loop control is detected from the change in the sensor signal of the combustion gas sensor (6, 104) during the supply of the combustion gas (1, 103) and it is specified therefrom whether the supplied amount of combustion gas is increased or decreased in order to reach the target value of the sensor signal.

11. The method according to any one of the preceding claims 8 to 10, **characterized in that** upon starting the heating unit (200), the mixing ratio of the gas mixture (9, 108) to be adjusted is precalculated by comparing the material properties of the combustion gas detected via the combustion gas sensor (6, 104) with values of a value table stored in the control unit and determining therefrom the resulting demand for gas for specifying the mixing ratio of the gas mixture (9, 108).

12. The method according to any one of the preceding claims, **characterized in that** the gas (2, 105) is air and the combustion gas (1, 103) can be selected as desired.

13. A heating unit (200), designed for carrying out the method according to any one of the preceding claims.

## Revendications

1. Procédé de réglage d'un mélange gazeux (9, 108) formé d'un gaz (2, 105) et d'un gaz combustible (1, 103) dans un appareil de chauffage alimenté au gaz combustible, le mélange gazeux étant produit dans la mesure où une quantité de gaz via un premier actionneur (4, 107) et une quantité de gaz combustible via un second actionneur (3, 102) sont fournies et mélangées,
un capteur de gaz microthermique (8, 106), qui détecte au moins une propriété matérielle du gaz (2, 105) étant exposé au gaz et transmettant un signal de capteur dépendant du gaz respectif à un appareil de commande (11, 113),
un capteur de gaz combustible microthermique (6, 104), qui détecte au moins une propriété matérielle du gaz combustible (9, 108), étant exposé au gaz combustible et transmettant un signal de capteur dépendant du gaz combustible respectif à l'appareil de commande (11, 113),
un capteur de mélange gazeux microthermique (10, 107, 109), qui détecte au moins une propriété matérielle du mélange gazeux (9, 108), étant exposé au mélange gazeux et transmettant en continu un signal de capteur dépendant du mélange gazeux respectif à l'appareil de commande (11, 113),
l'appareil de commande (11, 113) comparant les signaux de capteur détectés du capteur de gaz combustible (6, 104) avec des valeurs de comparaison mesurées en laboratoire et enregistrées dans une table de valeurs dans l'appareil de commande (11, 113), et une composition de gaz combustible et un rapport de consigne/de mélange du mélange gazeux (9, 108) étant par conséquent déterminés à partir du gaz combustible et du gaz, le rapport de consigne/de mélange se trouvant à une valeur de consigne du signal de capteur du capteur de mélange gazeux (10, 106, 109),
et l'appareil de commande (11, 113) comparant le signal de capteur détecté du capteur de mélange gazeux (10, 106, 109) avec la valeur de consigne du signal de capteur du capteur de mélange gazeux (10, 107, 109) et, en cas d'écart du signal de capteur détecté avec la valeur de consigne du signal de capteur du capteur de mélange gazeux (10, 107, 109), commandant au moins l'un des premier et second actionneurs en fonction des signaux de capteur détectés du capteur de gaz (8, 106) et du capteur de gaz combustible (6, 104) et ainsi le mélange gazeux (9, 108) étant atteint en augmentant ou en réduisant la quantité de gaz et/ou en augmentant ou en réduisant la quantité de gaz combustible jusqu'à la valeur de consigne du signal de capteur du capteur de mélange gazeux (10, 107, 109), **caractérisé en ce que** la valeur de consigne du signal de capteur du capteur de mélange gazeux (10, 107, 109) est ajustée en fonction d'une composition du gaz ou du gaz combustible par l'appareil de commande (11, 113), et
la valeur de consigne du signal de capteur du capteur de mélange gazeux (10, 107, 109) étant ajustée par un processus d'étalonnage.

2. Procédé selon la revendication 1, **caractérisé en ce que** la propriété matérielle du gaz combustible et du mélange gazeux (9, 108) détectée par le capteur de gaz combustible microthermique (6, 104) et le capteur de mélange gazeux (10, 106, 109) est/sont la conductivité thermique et/ou la diffusivité thermique du gaz combustible et du mélange gazeux.

3. Procédé selon la revendication 1 ou 2, **caractérisé en ce que** la propriété matérielle du gaz détecté par le capteur de gaz microthermique (8, 106) est l'humidité relative et/ou la conductivité thermique et/ou la diffusivité thermique et/ou la vitesse du son du gaz.

4. Procédé selon l'une des revendications précédentes 1 à 3, **caractérisé en ce que** le processus d'étalonnage est effectué par un réglage de courant d'ionisation d'un signal de flamme d'un brûleur (111) de l'appareil de chauffage (200) jusqu'à ce qu'une valeur de consigne d'ionisation soit atteinte.

5. Procédé selon la revendication 4, **caractérisé en ce que** lorsque la valeur de consigne d'ionisation est atteinte, l'au moins une propriété matérielle du mélange gazeux (9, 108) est mesurée au moyen du capteur de mélange gazeux (10, 107, 109) et enregistrée comme nouvelle valeur de consigne du signal de capteur dans l'appareil de commande (11, 113).

6. Procédé selon les revendications 1 à 5, **caractérisé en ce que** le processus d'étalonnage a lieu en cas d'anomalie du signal de capteur du capteur de mélange gazeux (10, 106, 109) ou de manière cyclique.

7. Procédé selon la revendication précédente, **caractérisé en ce que** l'anomalie du signal du capteur est déterminée lorsque l'appareil de chauffage est démarré en ne fournissant initialement que le gaz connu (2, 105) et en l'exposant au capteur de mélange gazeux (10, 107, 109), une anomalie se trouvant si le signal de capteur mesuré par le capteur de mélange gazeux (10, 107, 109) ne correspond pas à un signal de capteur pour le gaz connu (2, 105).

8. Procédé selon l'une des revendications précédentes, **caractérisé en ce qu'**une famille de gaz du gaz combustible est déterminée directement par le capteur de gaz combustible (6, 104).

9. Procédé selon la revendication précédente, **caractérisé en ce que** le sens d'action du réglage du rapport de mélange du mélange gazeux (9, 108) est déterminé directement à partir de la détermination de la famille de gaz, le sens d'action du réglage étant déterminé par le fait que, pour atteindre la valeur de consigne du signal du capteur, la quantité de gaz combustible fournie est augmentée ou diminuée.

10. Procédé selon la revendication précédente, **caractérisé en ce que** le sens d'action du réglage est déterminé à partir de la variation du signal de capteur du capteur de gaz combustible (6, 104) lorsque le gaz combustible (1, 103) est alimenté, et il est par conséquent déterminé si la quantité de gaz combustible fournie est augmentée ou diminuée pour atteindre la valeur de consigne du signal de capteur.

11. Procédé selon l'une des revendications précédentes 8 à 10, **caractérisé en ce que** lorsque l'appareil de chauffage (200) est démarré, le rapport de mélange à régler du mélange gazeux (9, 108) est précalculé en comparant les propriétés matérielles du gaz combustible détecté par le capteur de gaz combustible (6, 104) par rapport aux valeurs d'une table de valeurs enregistrées dans l'appareil de commande et le besoin en gaz résultant est par conséquent déterminé pour la détermination du rapport de mélange du mélange gazeux (9, 108).

12. Procédé selon l'une des revendications précédentes, **caractérisé en ce que** le gaz (2, 105) de l'air et le gaz combustible (1, 103) peuvent être choisis librement.

13. Appareil de chauffage (200) destiné à mettre en oeuvre le procédé selon l'une des revendications précédentes.
